# EUROPÄISCHE PATENTSCHRIFT

(11) **EP 2 598 776 B1**
(45) Veröffentlichungstag und Bekanntmachung des Hinweises auf die Patenterteilung: **10.10.2018**
(21) Anmeldenummer: 11721493.2
(22) Anmeldetag: 17.05.2011
(51) Int. Cl.: F16H 61/24

(54) **SCHALTVORRICHTUNG FÜR EIN GETRIEBE**
SHIFTING DEVICE FOR A TRANSMISSION
DISPOSITIF DE CHANGEMENT DE VITESSE POUR UNE BOÎTE DE VITESSES

(30) Priorität: 26.07.2010 DE 102010032250
(43) Veröffentlichungstag der Anmeldung: 05.06.2013
(73) Patentinhaber: Schaeffler Technologies AG & Co. KG, 91074 Herzogenaurach (DE)
(72) Erfinder: ROST, Markus, 90765 Fürth (DE); TRISSLER, Arnold, 91074 Herzogenaurach (DE); HIRT, Gunter, 90617 Puschendorf (DE)
(86) Internationale Anmeldenummer: PCT/EP2011/057933
(87) Internationale Veröffentlichungsnummer: WO 2012/013377

(56) Entgegenhaltungen:
- WO-A1-2006/041347
- DE-A1- 19 636 506
- DE-A1-102006 024 627
- FR-A1- 2 882 122

## Beschreibung

### Gebiet der Erfindung

Die Erfindung betrifft eine Schaltvorrichtung für ein Zahnräderwechselgetriebe eines Kraftfahrzeugs, mit einer Schaltwelle und einer Zusatzmasse, welche beim Schaltvorgang mit der Schaltwelle gekoppelt ist.

### Hintergrund der Erfindung

Eine Schaltvorrichtung der gattungsgemäßen Art ist beispielsweise aus der DE 196 36 506 A1 bekannt. Dort wird es als nachteilig erkannt, dass bei Schaltvorgängen in Kraftfahrzeug-Zahnräderwechselgetrieben gelegentlich Kraftspitzen infolge schneller Schaltvorgänge auftreten, die eine hohe Belastung für die Vorrichtung darstellen. Daher sieht die in dem genannten Dokument beschriebene Lösung vor, dass eine Zusatzmasse an einem Ausleger angeordnet wird, der um eine Drehachse drehen kann. Der Ausleger ist über einen Lenker mit einem Schalthebel verbunden, mit dem die Schaltwelle betätigt wird.

Beim Schalten, also beim Betätigen des Schalthebels zum Einlegen eines Ganges, wird daher der Ausleger und mit ihm die Zusatzmasse mitbewegt, was dem Aufbau von Kraftspitzen entgegenwirkt. Nachteilig an dieser bekannten Schaltvorrichtung ist, dass sich bei schnellen Schaltvorgängen immer noch Kraftspitzen aufbauen können, die störend bzw. schädlich sind.

Zur Lösung dieses Problems zeigt DE 10 2006 024 627 A1 eine Schaltvorrichtung, bei der die Zusatzmasse nicht fest an den Ausleger gekoppelt ist, sondern mittels eines Federelements elastisch relativ beweglich zu diesem ist, um eine sanftere Einsteuerung der Massenkräfte zu erreichen und Kraftspitzen besser abzubauen.

Nachteilig beiden vorstehend genannten Anordnungen ist allerdings, dass unter bestimmten Betriebsbedingungen Vibrationen und Erschütterungen, im folgenden unter Schwingungen zusammengefasst, von den Losrädern und der Synchronisation auf die Schaltwelle übertragen werden. Bei bestimmten Drehzahlen ist die Schaltvorrichtung besonders anfällig für Resonanzen, da ihre Eigenfrequenz oder ein ganzzahliges Vielfaches ihrer Eigenfrequenz angeregt wird. Insbesondere die in der Regel relativ weit auskragende Zusatzmasse schwingt dann besonders leicht. Die entstehenden Resonanzen beeinträchtigen den Fahrkomfort erheblich und sind am Bedienhebel des Getriebes im Fahrzeuginnenraum spürbar. Zur Vermeidung kann die Zusatzmasse aber nicht in jedem Fall kleiner gewählt werden oder anders angeordnet werden, da die ansonsten ihre Funktion nicht mehr voll erfüllt.

WO 2006/041347 zeigt eine gattungsbildende Schaltvorrichtung, die zur Dämpfung von Resonanzen vorsieht, dass ein Massekörper in einem viskosen Fluid gelagert wird und dieses in Umfangsrichtung verdrängt. Die störenden Resonanzen werden damit vermindert, aber nicht in ihrer Ursache beseitigt.

### Aufgabe der Erfindung

Der vorliegenden Erfindung liegt daher die Aufgabe zugrunde, ein Verfahren zur Vermeidung von Schwingungen einer Schaltvorrichtung bereitzustellen bzw. eine Schaltvorrichtung der eingangs genannten Art so fortzubilden, dass unerwünschte Schwingungen beim Betrieb vermieden werden und gleichzeitig Kraftspitzen wirkungsvoll unterbunden werden.

### Zusammenfassung der Erfindung

Die Aufgabe wird bei einer Schaltvorrichtung nach Anspruch 1 dadurch gelöst, dass die Schaltvorrichtung zusätzlich zur Zusatzmasse mindestens eine Tilgermasse als weitere Masse aufweist, die nicht starr an die Zusatzmasse gekoppelt ist. Während die Zusatzmasse als Primärzusatzschaltmasse dazu dient, durch Trägheitsvergrößerung der Schaltvorrichtung Kraftspitzen aufnehmen und abbauen zu können, verändert die Tilgermasse das Frequenzspektrum der Schaltvorrichtung infolge einer externen Anregung so, dass die Resonanzamplituden zumindest in dem Frequenzbereich, der für den Betrieb der Schaltvorrichtung typisch ist, vermindert werden. Dadurch wird nicht nur das sich infolge externer Anregungen ergebende Frequenzspektrum geglättet, sondern zusätzlich die Resonanzfrequenz in einen Bereich verschoben, der unterhalb der Leerlaufdrehzahl einer für das Zahnräderwechselgetriebe vorgesehenen Brennkraftmaschine liegt, so dass nur während des Startvorgangs die Eigenfrequenz des Systems kurz durchlaufen wird. Alternativ wird die Eigenfrequenz in einen Bereich gelegt, der oberhalb zulässiger Getriebedrehzahlen liegt und daher nie erreicht wird.

Die Zusatzmasse und die Tilgermasse können auch so ausgelegt werden, dass nur eine Teilverschiebung der Resonanzfrequenz in Bereiche erfolgt, die nur unter seltenen Betriebsbedingungen erreicht werden. Ebenfalls ist denkbar, eine Erhöhung der Resonanzamplitude in bestimmten Frequenzbereichen zu vorzusehen, wenn die Resonanzspitzen in anderen Frequenzbereichen dafür deutlich gesenkt werden können.

Die Tilgermasse ist aufgrund ihres Zwecks in der Regel anders dimensioniert als die Zusatzmasse. Je nach Ausführungsform und Anbindung kann sie um eine Größenordnung kleiner als die Zusatzmasse sein. Dabei ist zu berücksichtigen, dass nicht nur die Masse, sondern auch die Geometrie der Tilgermasse für ihre Funktion von Bedeutung ist.

In einer Ausgestaltung der Erfindung ist die Tilgermasse so angeordnet, dass sie stets relativ zur Zusatzmasse verschiebbar ist, sowohl wenn Sollkräfte auf die Zusatzmasse wirken, als auch bei nicht betätigter Schaltvorrichtung.

Bei Schaltvorrichtungen ohne Zusatzmasse kann die Tilgermasse an oder auf der Schaltwelle angeordnet sein.

Die Tilgermasse ist vorzugsweise gegenüber den übrigen Bauteilen der Schaltvorrichtung durch ein mechanisches Federelement angefedert. Alternativ sind hydraulische Anfederungen denkbar.

Die Tilgermasse braucht kein Feststoff sein. Sie kann auch als eine gekapselte Flüssigkeitsmenge ausgebildet sein, was ein Anfedern entbehrlich macht. Dazu ist sie beispielsweise zwischen zwei kommunizierenden Kammern angeordnet. Auch eine nicht vollständig befüllte Kapsel mit einer Flüssigkeit geeigneter Viskosität ist denkbar. Allgemein ist die Tilgermasse ein Mittel, das die gewünschte Änderung im Frequenzspektrum der Schaltvorrichtung ermöglicht.

Die räumliche Lage der Tilgermasse kann prinzipiell frei gewählt werden. In den meisten Schaltvorrichtungen werden allerdings die stärksten Vibrationen und Schwingungen an der Schaltmasse auftreten, da diese zum einen relativ massereich ist und zum anderen in der Regel von der Schaltwelle radial weit beabstandet ist. Die Schaltmasse prägt somit entscheidend die Anfälligkeit der Schaltvorrichtung für große Schwingungsamplituden. Daher ist in einer weiteren Ausgestaltung der Erfindung vorgesehen, die Tilgermasse in räumlicher Nähe zur auskragenden Zusatzmasse anzuordnen, da sie dort sich von Schwingungen besonders leicht anregen lässt und das Schwingungsspektrum besonders effektiv ändern und ggf. die Höhe der Schwingungen besonders einfach (teil-)kompensieren kann.

Die Schaltvorrichtung ist einfach handhabbar, wenn die Tilgermasse in die Schaltvorrichtung, insbesondere in die Zusatzmasse, integriert ist. Dazu lässt sich die Tilgermasse zusammen mit der Schaltmasse auf einem Ausleger anordnen, der eine entsprechende Aussparung für die Tilgermasse und die sie anbindenden Bauteile aufweist.

In einer Variante erfolgt die Bewegung der Tilgermasse so, dass die Tilgermasse auf ihrem ganzen Bewegungsweg zumindest lateral von der Schaltmasse flankiert wird. Gleichzeitig bleibt gegenüber Anordnungen ohne Tilgermasse der benötigte Bauraum in etwa gleich.

Aufgrund von Einbau- und Herstellungstoleranzen weist jede Schaltvorrichtung ein ihr charakteristisches Anregungsspektrum auf. In einer Variante der Erfindung ist daher eine Tilgermasse vorgesehen, die austauschbar ist, ohne dass andere Bauteile demontiert werden müssen. Die Tilgermasse kann dazu der einzelnen Schaltvorrichtung zugepaart werden, oder es sind verschiedene Einbaustellungen vorgesehen, die dem individuellen Frequenzverhalten Rechnung tragen. Alternativ kann die verbaute Tilgermasse eine Halterung für ein Massenkorrekturelement aufweisen, oder der Federweg wird variiert, indem beispielsweise die Federvorspannung geändert wird. Auch können Federn mit progressiver Kennlinie die Tilgermasse anfedern.

Die Erfindung ist nicht auf eine Tilgermasse beschränkt. So können ggf. mehrere Eigenfrequenzen der Schaltvorrichtung und deren Oberschwingungen besonders effektiv durch mehrere Tilgermassen verschoben werden, die auf die einzelnen zu verstimmenden Resonanzfrequenzen abgestimmt werden. Die Tilgermassen können selbstverständlich untereinander abweichende Geometrien, Massen und Anordnungen in der Schaltvorrichtung aufweisen. Sie sind in der Regel sowohl zu einer Zusatzmasse als auch untereinander unabhängig voneinander auslenkbar. Im einfachsten Fall ist in verschiedenen Armen einer Zusatzmasse jeweils eine Tilgermasse angeordnet.

Aus Masse- und Bauraumgründen ist es zweckmäßig, die Tilgermasse am Zentralschaltorgan, in der Regel an der Schaltwelle, auszubilden. In Getrieben ohne Schaltwelle können auch mehrere Tilgermassen an einer oder mehreren Schaltgabeln oder an anderen Bauelementen ausgebildet sein.

Besonders vorteilhaft ist es, mittels der Tilgermasse nicht nur eine Frequenzverschiebung der Eigenfrequenz zu bewirken, sondern auch eingeleitete Schwingungen zu dämpfen. In einer Ausgestaltung der Erfindung leistet die Tilgermasse dazu Federarbeit oder Reibungsarbeit. Alternativ kann die Tilgermasse sich beispielsweise in einem flüssigkeitsbefülltem Zylinder bewegen, um wie bei Stoßdämpfern Ventilarbeit zu leisten. Damit erfolgt eine Dämpfung auch bei geringen Schwingungsamplituden.

Eine angefederte Tilgermasse kann zusätzlich am Ende ihres Federweges gegen Gummielemente anschlagen, wodurch eine zusätzliche Dämpfung der eingeleiteten Schwingungen bewirkt wird, sofern sie ein bestimmtes Maß übersteigen.

Durch die Erfindung kann weiterhin der Aufbau der Schaltvorrichtung vereinfacht werden. Im Stand der Technik sind Zusatzmassen in der Regel gleitgelagert und weisen ein möglichst kleines Betriebsspiel auf, um den Schaltkomfort beeinträchtigende Schwingungen möglichst nicht entstehen zu lassen. Durch das geringe Betriebsspiel ist eine Relativverschiebung der Schaltstange zur Zusatzmasse, wie es für das Wählen einer Schaltgasse wünschenswert ist, aber erschwert, so dass das Wählen schwergängig erscheint. Die Erfindung ermöglicht daher eine Vergrößerung des Betriebsspiels und somit eine leichtere Verschiebbarkeit der Zusatzmasse zur Schaltstange, so dass die Wählbewegung ohne weitere Maßnahmen komfortabler wird. Die so vermehrt auftretenden Schwingungen werden durch die Tilgermasse kompensiert. Konstruktiv aufwändigere Lösungen oder der Einsatz eines Wälzlagers werden damit vermieden. Die Erfindung betrifft außerdem ein Verfahren zur Reduzierung von Schwingungen einer Getriebeschaltvorrichtung mit einer Schaltwelle. Zwei Massen, die untereinander verschieblich angeordnet sind, bilden dabei ein Zwei-Massen-System, das über die Wahl der Massen, ihrer Anordnung zueinander und in Bezug auf die Welle, ihrer Trägheitsmomente und ihrer Anlenkung bzw. Aufhängung so an die Schaltvorrichtung angepasst wird, dass die Eigenfrequenzen der Schaltvorrichtung im Vergleich zu einer Schaltvorrichtung ohne Tilgermasse verschoben sind. Die Verschiebung der Resonanzfrequenz erfolgt in einen Bereich, wie er vorstehend zur gegenständlichen Ausbildung der Erfindung dargelegt wurde. Idealerweise erfolgt zusätzlich eine Dämpfung, so dass eingeleitete Schwingungen zusätzlich schneller abklingen.

### Kurze Beschreibung der Zeichnungen

In den Zeichnungen sind Ausführungsbeispiele der Erfindung dargestellt. Es zeigen:
- Fig. 1: eine Schaltvorrichtung für ein Zahnräderwechselgetriebe eines Kraftfahrzeugs in perspektivischer Ansicht und

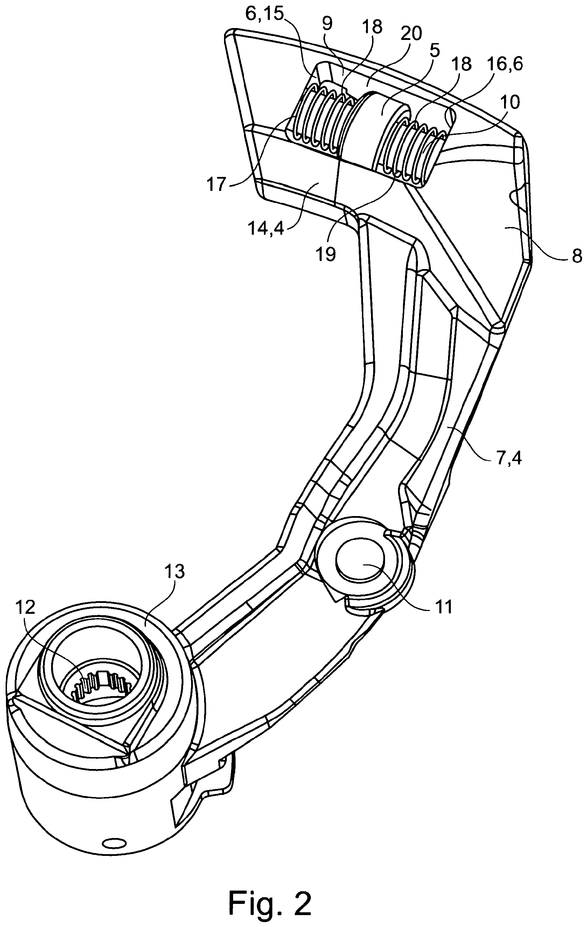

- Fig. 2: eine vergrößerte Ansicht des Auslegers der Schaltvorrichtung nach Figur 1 mit einer anderen Tilgermasse.

### Ausführliche Beschreibung der Zeichnungen

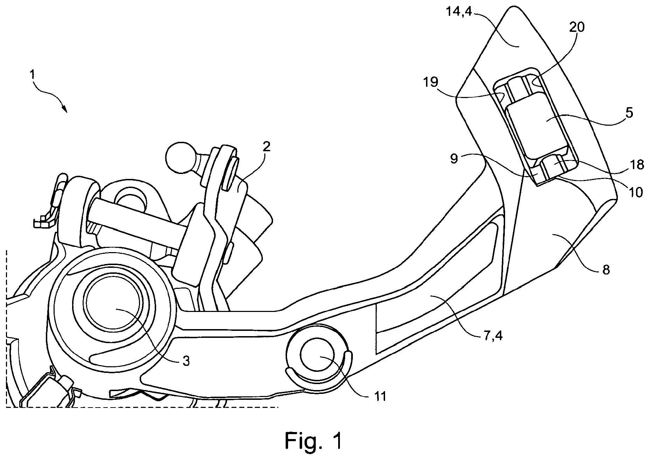

Figur 1 zeigt einen Teil einer Schaltvorrichtung 1 für ein Zahnräderwechselgetriebe eines Kraftfahrzeugs. Ein nicht dargestellter Handschalthebel greift über ein geeignetes Gestänge oder Kabel über ein Kugelgelenk 11 an einer Zusatzmasse 4 an. Damit wird eine Schaltwelle 3 verdreht, die mittels nicht dargestellter Schaltfinger die Wechselzahnräder des Getriebes in oder außer Eingriff bringt. Mit dem Wählhebel 2 kann die Schaltwelle 3 axial verschoben werden, ohne dass die Zusatzmasse 4 axial mit verschoben wird.

Auf der Schaltwelle 3 ist ein Zylinder 13 mittels einer Innenverzahnung 12 drehfest angeordnet. Der Zylinder 13 ist mit einem im Wesentlichen radial gerichteten Ausleger 7 versehen, der an seinem radial äußeren Ende 8 in ein in Umfangsrichtung gerichtetes, abgewinkeltes Endstück 14 übergeht. Das Endstück 14 und der Ausleger 7 sind einteilig ausgebildet und bilden zusammen die Zusatzmasse 4. Aufgrund der drehfesten Kopplung an die Schaltwelle 3 wird die Dreh- bzw. Schwenkbewegung des am Kugelkopf 11 angreifenden Hebels direkt auf den Ausleger 7 übertragen.

Da der Ausleger 7 die eingeleiteten Kraftspitzen sicher auf das Endstück 14 übertragen muss und andererseits die Gesamtmasse der Schaltvorrichtung 1 nicht unnötig erhöhen soll, weist er einen geringeren Querschnitt als das Endstück 14 auf. Das Endstück 14 weist ein Fenster 9 auf, dessen in Umfangsrichtung gerichtete Stirnseiten 15, 16 eine Bohrung 17 aufweisen. In der Bohrung 17 ist ein Stift 10 verliersicher gehalten, auf dem die Tilgermasse 5 längsverschieblich angeordnet ist. Die Tilgermasse 5 ist ein torusförmiger Körper, der sich an den beiden Stirnseiten 15, 16 über den Stift 10 umschließende Schraubendruckfedern 18 abstützt, die ihn in Ruhestellung in etwa der Mitte des Fensters 9 halten. Sie ist somit beweglich zur Zusatzmasse 4 angeordnet.

Die Anordnung kann extern eingebrachte Schwingungsenergie absorbieren, indem die Tilgermasse 5 an ihren in Bewegungsrichtung seitlich gelegenen Fensterrändern 19, 20 reibt. Dazu ist sie mit einer entsprechenden Beschichtung versehen. Die Stirnseiten 15, 16 sind mit Gummielementen 6 versehen, so dass bei besonders hohen Auslenkungen zusätzlich Schwingungsenergie abgebaut werden kann.

### Bezugszeichenliste

- 1: Schaltvorrichtung
- 2: Schalthebel
- 3: Schaltwelle
- 4: Primärzusatzschaltmasse
- 5: Sekundärzusatzschaltmasse
- 6: Gummielement
- 7: Ausleger
- 8: radial äußeres Ende
- 9: Fenster
- 10: Stift
- 11: Kugelgelenk
- 12: Innenverzahnung
- 13: Zylinder
- 14: Endstück
- 15: Stirnseite
- 16: Stirnseite
- 17: Bohrung
- 18: Druckfeder
- 19: Fensterrand
- 20: Fensterrand

## Patentansprüche

1. Schaltvorrichtung (1) für ein Zahnräderwechselgetriebe eines Kraftfahrzeugs mit einer Schaltwelle (3) und einer an einem Ausleger (7) angeordneten, zur Aufnahme von Kraftspitzen vorgesehenen Zusatzmasse (4), welche beim Schaltvorgang mit der Schaltwelle (3) gekoppelt ist, wobei die Schaltvorrichtung (1) eine Tilgermasse (5) aufweist, die gegenüber der Zusatzmasse (4) und der Schaltwelle (3) beweglich angeordnet ist, **dadurch gekennzeichnet, dass** die Tilgermasse (5) vorgesehen ist, um die Eigenfrequenz der Schaltvorrichtung (1) zu verschieben, wobei
die Eigenfrequenz der Schaltvorrichtung (1) durch die Tilgermasse (5) unter die Leerlaufdrehzahl des mit der Schaltvorrichtung (1) koppelbaren Verbrennungsmotors oder über die Betriebsdrehzahl des durch die Schaltvorrichtung (1) betätigbaren Getriebes verschoben ist.

2. Schaltvorrichtung nach Anspruch 1, **dadurch gekennzeichnet, dass** die Schaltvorrichtung (1) mehrere, gegenüber der Zusatzmasse (4) beweglich angeordnete Tilgermassen (5) aufweist.

3. Schaltvorrichtung nach Anspruch 1, **dadurch gekennzeichnet, dass** die Tilgermasse (5) zusätzlich eingeleitete Schwingungen dämpft.

4. Schaltvorrichtung nach Anspruch 3, **dadurch gekennzeichnet, dass** die Tilgermasse (5) gegen Gummielemente (6) anschlägt.

5. Schaltvorrichtung nach Anspruch 1, **dadurch gekennzeichnet, dass** die Zusatzmasse (4) und die Tilgermasse (5) untereinander angefedert sind.

6. Schaltvorrichtung nach Anspruch 1, **dadurch gekennzeichnet, dass** Tilgermasse (5) an oder in der Zusatzmasse (4) angeordnet ist.

7. Verfahren zur Schwingungsminimierung einer Schaltvorrichtung (1) mit einer Schaltwelle (3) und einer Tilgermasse (5), wobei die Schaltwelle (3) und die Tilgermasse (5) ein Zwei-Massen-Schwingsystem bilden, um das aufgrund externer Schwingungen erzeugte Frequenzspektrum der Schaltvorrichtung (1) so zu ändern, dass die Eigenfrequenz der Schaltvorrichtung (1) durch die Tilgermasse (5) unter die Leerlaufdrehzahl des mit der Schaltvorrichtung (1) koppelbaren Verbrennungsmotors oder über die Betriebsdrehzahl des durch die Schaltvorrichtung (1) betätigbaren Getriebes verschoben ist.

8. Verfahren nach Anspruch 7, **dadurch gekennzeichnet, dass** mittels der Tilgermasse (5) die extern in die Schaltvorrichtung (1) eingeleiteten Schwingungen zusätzlich gedämpft werden.

## Claims

1. Shifting apparatus (1) for a change speed gearbox of a motor vehicle having a shift shaft (3) and an additional mass (4) which is arranged on an arm (7), is provided to absorb force spikes and is coupled to the shift shaft (3) during the shifting operation, the shifting apparatus (1) having an absorber mass (5) which is arranged movably with respect to the additional mass (4) and the shift shaft (3), **characterized in that** the absorber mass (5) is provided in order to shift the natural frequency of the shifting apparatus (1), the natural frequency of the shifting apparatus (1) being shifted by way of the absorber mass (5) to below the idling rotational speed of the internal combustion engine which can be coupled to the shifting apparatus (1) or to above the operating rotational speed of the gearbox which can be actuated by way of the shifting apparatus (1).

2. Shifting apparatus according to Claim 1, **characterized in that** the shifting apparatus (1) has a plurality of absorber masses (5) which are arranged movably with respect to the additional mass (4).

3. Shifting apparatus according to Claim 1, **characterized in that** the absorber mass (5) damps additionally introduced vibrations.

4. Shifting apparatus according to Claim 3, **characterized in that** the absorber mass (5) comes into contact with rubber elements (6).

5. Shifting apparatus according to Claim 1, **characterized in that** the additional mass (4) and the absorber mass (5) are spring-loaded among one another.

6. Shifting apparatus according to Claim 1, **characterized in that** the absorber mass (5) is arranged on or in the additional mass (4).

7. Method for vibration minimization of a shifting apparatus (1) having a shift shaft (3) and an absorber mass (5), the shift shaft (3) and the absorber mass (5) forming a dual-mass vibration system, in order to change that frequency spectrum of the shifting apparatus (1) which is generated on account of external vibrations, in such a way that the natural frequency of the shifting apparatus (1) is shifted by way of the absorber mass (5) to below the idling rotational speed of the internal combustion engine which can be coupled to the shifting apparatus (1) or to above the operating rotational speed of the gearbox which can be actuated by way of the shifting apparatus (1).

8. Method according to Claim 7, **characterized in that** the vibrations which are introduced externally into the shifting apparatus (1) are additionally damped by means of the absorber mass (5).

## Revendications

1. Dispositif de changement de vitesse (1) pour une boîte de vitesses à engrenage d'un véhicule automobile avec un arbre de changement de vitesse (3) et une masse additionnelle (4) disposée sur un bras (7) et prévue pour reprendre des pointes de force, qui est couplée à l'arbre de changement de vitesse (3) pendant une opération de changement de vitesse, dans lequel le dispositif de changement de vitesse (1) présente une masse d'amortissement (5), qui est disposée de façon mobile par rapport à la masse additionnelle (4) et à l'arbre de changement de vitesse (3), **caractérisé en ce que** la masse d'amortissement (5) est prévue pour déplacer la fréquence propre du dispositif de changement de vitesse (1), dans lequel la fréquence propre du dispositif de changement de vitesse (1) est déplacée par la masse d'amortissement (5) en dessous du nombre de tours de ralenti du moteur à combustion interne pouvant être couplé au dispositif de changement de vitesse (1) ou au-dessus du nombre de tours de fonctionnement de la boîte de vitesses actionnable par le dispositif de changement de vitesse (1).

2. Dispositif de changement de vitesse selon la revendication 1, **caractérisé en ce que** le dispositif de changement de vitesse (1) présente plusieurs masses d'amortissement (5) disposées de façon mobile par rapport à la masse additionnelle (4).

3. Dispositif de changement de vitesse selon la revendication 1, **caractérisé en ce que** la masse d'amortissement (5) amortit des vibrations introduites en plus.

4. Dispositif de changement de vitesse selon la revendication 3, **caractérisé en ce que** la masse d'amortissement (5) bute contre des éléments en caoutchouc (6).

5. Dispositif de changement de vitesse selon la revendication 1, **caractérisé en ce que** la masse additionnelle (4) et la masse d'amortissement (5) sont suspendues l'une par rapport à l'autre.

6. Dispositif de changement de vitesse selon la revendication 1, **caractérisé en ce que** la masse d'amortissement (5) est disposée sur ou dans la masse additionnelle (4).

7. Procédé de minimisation des vibrations d'un dispositif de changement de vitesse (1) avec un arbre de changement de vitesse (3) et une masse d'amortissement (5), dans lequel l'arbre de changement de vitesse (3) et la masse d'amortissement (5) forment un système vibrant à deux masses, afin de changer le spectre de fréquence du dispositif de changement de vitesse (1) produit à cause de vibrations externes, de telle manière que la fréquence propre du dispositif de changement de vitesse (1) soit déplacée par la masse d'amortissement (5) en dessous du nombre de tours de ralenti du moteur à combustion interne pouvant être couplé au dispositif de changement de vitesse (1) ou au-dessus du nombre de tours de fonctionnement de la boîte de vitesses actionnable par le dispositif de changement de vitesse (1).

8. Procédé selon la revendication 7, **caractérisé en ce que** les vibrations introduites de l'extérieur dans le dispositif de changement de vitesse (1) sont amorties en plus au moyen de la masse d'amortissement (5).
